# EUROPEAN PATENT SPECIFICATION

(11) **EP 1 249 475 B1**
(45) Date of publication and mention of the grant of the patent: **16.03.2005**
(21) Application number: 00987716.8
(22) Date of filing: 22.12.2000
(51) Int. Cl.: C09C 3/12, C08K 9/06, C09J 201/00, C09K 3/10, C08L 101/00

(54) **SURFACE-MODIFIED INORGANIC OXIDE POWDER, PROCESS FOR PRODUCING THE SAME, AND USE THEREOF**
OBERFLÄCHENMODIFIZIERTES ANORGANISCHES OXIDPULVER, VERFAHREN ZUR HERSTELLUNG DESSELBEN UND VERWENDUNG DESSELBEN
POUDRE D'OXYDE INORGANIQUE A SURFACE MODIFIEE, PROCEDE DE PRODUCTION ASSOCIE ET UTILISATION DE CETTE POUDRE

(30) Priority: 24.12.1999 JP 36753599
(43) Date of publication of application: 16.10.2002
(73) Proprietor: Nippon Aerosil Co., Ltd., Shinjuku-ku, Tokyo 163-0913 (JP)
(72) Inventor: AMANO, Yuki Yokkaichi Plant, Yokkaichi-shi Mie 510-0841 (JP); ISHIBASHI, Naruyasu Yokkaichi Plant, Yokkaichi-shi Mie 510-0841 (JP); SHIBASAKI, Takeyoshi Yokkaichi Plant, Yokkaichi-shi Mie 510-0841 (JP)
(74) Representative: HOFFMANN - EITLE
(86) International application number: PCT/JP2000/009143
(87) International publication number: WO 2001/048094

(56) References cited:
- EP-A- 0 251 176
- EP-A2- 0 251 176
- JP-A- 5 139 726
- JP-A- 6 228 457
- JP-A- 63 043 976
- US-A- 5 843 525
- US-A- 5 889 090
- PATENT ABSTRACTS OF JAPAN vol. 017, no. 513 (C-1111), 16 September 1993 (1993-09-16) & JP 05 139726 A (MITSUBISHI MATERIALS CORP), 8 June 1993 (1993-06-08)

## Description

### [FIELD OF THE INVENTION]

The present invention relates to a surface modified inorganic oxide powder, process for producing the same, and use thereof, wherein said powder is used in a polar resin compound, such as a polar resin adhesive, to improve thickening, filling for reinforcement, and an adhesiveness etc.

### [BACKGROUND OF THE INVENTION]

It has been known in general that a surface of a metal oxide fine powder is modified by a silicone oil, etc. For example, the "TECHNICAL BULLETIN Aerosil No.3" (published by Nippon AEROZIL Co.), which is published by this inventors, shows an example, in which a silica powder is dry-treated with polydimethyl-siloxane, and said silica powder is used for an epoxy adhesive. Moreover, U.S. Patent No. 4, 477, 607, and No. 4,713,405, show the examples, in which the silica powder is dry-treated with polydimethyl-siloxane, and said silica powder is added to a cyano-acrylate adhesive as a thickening agent.
Such a surface modified metal oxide powder is used widely to give a thickening or a thixotropy, as a filler of the polar resin, such as an epoxy resin, an urethane resin, and a polyester etc. In such application, thickening, thixotropy, and stability with the passage of time are important factors. Recently, external additives are required, which can give high viscosity and high thixotropy by less addition than used before, and also have the excellent stability with the passage of time.

In addition to such thickening and filling for reinforcement, the present inventors disclosed previously an inorganic oxide powder which is useful for improving the fluidity, preventing the coagulation, and adjusting the electrostatic charge, etc., of powder materials, (Japanese Patent Laid Open, Hei 09-59533). This powder is a surface modified inorganic oxide powder made by a two-stage process, wherein an inorganic oxide powder, such as silica, is treated with an alkylsilane, and subsequently with an organopolysiloxane having functional groups, such as a halogen group, a hydroxyl group or an alkoxy group at both ends of main chain. The powder obtained thereby has excellent stability with the passage of time and high surface treatment effect.

### [DISCLOSURE OF THE INVENTION]

The present invention provides a surface modified inorganic oxide powder which is superior to the above-mentioned prior surface modified inorganic oxide powder, and is excellent in the stability with the passage of time, thickening and thixotropy, and especially can give much higher thickening or thixotropy property when kneaded in a polar resin. In addition, the present invention also provides its production process and use thereof.

According to a first aspect, the present invention provides a treatment liquid for surface modifying inorganic oxide powder which comprises a mixed solution of 1-200 parts by weight of an organopolysiloxane of formula [1] having a viscosity of 10 to 2000 cSt at 25°C and 1 part by weight of a silane compound, and a substance which modifies the pH of the mixed solution selected from an inorganic acid, an organic acid, ammonia or an amine; 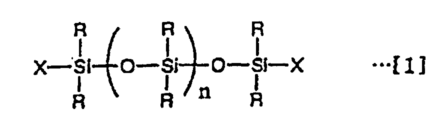 wherein R is independently hydrogen or an alkyl group optionally substituted by a vinyl group, a phenyl group, a polyether group, an epoxy group or an amino group; X is R, where R is as previously defined, or a hydrolysis group selected from a halogen atom, a hydroxyl group or an alkoxy group; and n is an integer of 15 to 500.

Preferably the organopolysiloxane of formula (1) is dimethylpolysiloxane.

Preferably the silane compound is an alkylsilane of general formula [2], [3] or [4], or any mixture of these:

R⁴SiX₃ [2]

R¹R²SiX₂ [3]

R¹R²R³SiX [4]

wherein R⁴, R¹, R² and R³ are independently alkyl groups and X is a halogen atom, a hydroxyl group or an alkoxy group.

Preferably the silane compound is an alkylsilane of the formula [2] above wherein R⁴ is an alkyl group including more than 6 carbon atoms and X is a methoxy group or an ethoxy group.

The surface modified inorganic oxide powder is treated in the presence of an inorganic acid or an organic acid when the mixed liquid of the organopolysiloxane and the silane compound is acidic, or in the presence of ammonia or an amine of the following general formula [5], when said mixed liquid is basic,

NR⁵R⁶R⁷ [5]

wherein R⁵, R⁶, and R⁷ are hydrogen, a methyl group or an ethyl group, optionally substituted by a functional group containing a vinyl group, a phenyl group or an amino group.

According to a further aspect, the present invention provides a surface modified inorganic oxide powder having an extractability with normal hexane of less than 30% by weight obtainable by:
(i) either spraying the treatment liquid as described above under a non-oxidising atmosphere on an inorganic oxide powder or dipping an inorganic oxide powder in the treatment liquid as described above, and
(ii) heating the powder surface treated with the treatment liquid;
the extractability with normal hexane of the surface modified inorganic powder being the weight percentage of surface treating agent extracted by refluxing 15 g of the surface modified inorganic oxide powder and 500 ml of n-hexane in a 2 litre four-mouth flask under a nitrogen atmosphere for 6 hours at 55°C.

Preferably the surface modified inorganic oxide powder has a specific surface area of 100 to 400 m²/g as measured by BET. The inorganic oxide powder of the present invention is preferably silica, titania or alumina, or a composite oxide of more than two kinds of these materials.

According to a further aspect, the present invention provides a process for producing surface modified inorganic oxide powder comprising the steps of:
(i) either spraying the surface treatment liquid as defined above on an inorganic powder or dipping the inorganic powder in the surface treatment liquid, and
(ii) heating the sprayed or dipped inorganic powder.
Preferably the above process further comprises the steps of:
adding 0.01 to 1 weight part of an acid, an amine or ammonia to 100 parts by weight of the mixed solution, to prepare the surface treatment liquid,
spraying said surface treatment liquid on the inorganic oxide powder while stirring under a non-oxidizing atmosphere, and
heating said sprayed powder at 200°C - 400°C.

According to yet a further aspect, the present invention further provides a polar resin compound comprising less than 50% by weight of the surface modified inorganic oxide powder as described above.

Preferably the main component of the polar resin is a urethane resin, an epoxy resin, an acrylic resin, an unsaturated polyester resin, a vinyl ester resin or a silicone modified resin. The resulting polar resin is useful as an adhesive or as a sealant.

### [I] Inorganic oxide powder

As the inorganic oxide powder used in the present invention, silica, titania, alumina, or a composite oxide powder of more than two kinds of them, can be used. Regarding such inorganic oxide powders, it is preferable that the specific surface area, which is measured by the nitrogen adsorbing method, that is called by BET method, is 100 to 400 m²/g. When the specific surface area is less than 100 m²/g, the high thickening effect is not obtained, and when said specific surface area is more than 400 m²/g, such a powder is not available commercially yet.

As the concrete example of the silica powder, it is preferable that the silica powder is made by the flame hydrolysis of a silicon halide compound, and has a specific surface area of 100 to 400 m²/g measured by BET, that is so-called fumed silica. This fumed silica is commercialised by the brand name of AEROSIL 130, 200, 300, and 380, TT600, and MOX170 (made by NIPPON AEROSIL CO., LTD.).

### [II] Organopolysiloxane

The organopolysiloxane has the general formula [1] described above and has a viscosity of 10 to 2000 cSt at 25°C. When the viscosity is les than 10 cSt, it is not preferable since said organopolysiloxane is volatilised by the heating step during the surface-treating of the metal oxide powder, such as silica, and the surface treatment becomes insufficient. On the other hand, when the viscosity is more than 2000 cSt, the uniform surface treatment becomes difficult since the viscosity is too high. In the organopolysiloxane, dimethylpolysiloxane, etc., can be obtained easily as a commercial product, so that it is easy to use. The brand names of the commercialized organopolysiloxane are shown in the following.
Product made by Shinetu Kagaku Kogyo Co.LTD : KF96 (dimethyl type), KF99 (methyl-hydrogen type), KF50 (methyl-phenyl type), KF410 (alkyl-modified type), KF105 (epoxy modified type), KF860 (amino modified type)
Product made by TORAY - Dow Corning - Silicone Co. LTD : SH200 (dimethyl type), SH550 (methyl-phenyl type), SH1107 (methyl hydrogen type), SF8416 (alkyl modified type), SH8400 (polyether modified type), PRX413 (both ends are hydroxyl group type)
Product made by Toshiba Silicone Co. LTD : TSF451 (dimethyl type), TSF431 (methyl-phenyl type), TSF4420 (alkyl modified type), TSF4440 (polyether modified type).

### [III] Alkylsilane

In the present invention, the silane compound preferably has the following general formula shown in [2], [3], or [4],

R⁴SiX₃ [2]

R¹R²SiX₂ [3]

R¹R²R³SiX [4]

wherein R⁴, R¹, R² and R³ are independently alkyl groups and X is a halogen atom, a hydroxyl group or an alkoxy group.

Preferably at least one of R⁴, R¹, R² and R³ is an alkyl group including more than 6 carbon atoms. Among these alkylsilanes, the alkylsilane of general formula [2] is readily available wherein the number of carbon atoms R⁴ is more than 6, and X is a methoxy group or an ethoxy group. Regarding these alkylsilanes, the brand names of commercialised products are shown in following. Besides these alkylsilanes, decylmethyldimethoxysilane or dihexyldimethoxysilane, etc. can be used.
Product made by Shinetu Kagaku Kogyo Co. LTD : KBM3063 (hexyl-trimethoxy-silane), KBM3083 (octyltrimethoxysilane), KBM3103c (decyltrimethoxysilane)
Product made by TORAY - Dow - Corning - Silicone Co. LTD : AY43-216MC (hexadecyltrimethoxysilane), AY43-218MC (octadecyltrimethoxysilane)
Product made by Degussa-Huels Co. LTD : Si108 (octyl-trimethoxysilane), Si208 (octyltriethoxysilane), DYNASYLAN9116.

### [IV] Surface modification process

In the surface modified inorganic oxide powder of the present invention, the organopolysiloxane chain and alkylsilyl group are formed on the surface of the inorganic oxide powder, by surface-treatment in the presence of the acid or the base with the mixed liquid of the organopolysiloxane and the silane compound as a treatment agent. By such surface treatment, polar resin becomes attracted to the surface of the inorganic oxide powder and can be easily adsorbed on it. In addition, the inorganic oxide powder becomes entangled with the polar resin chain to achieve a high thickening effect. Such surface-treated inorganic oxide powder has higher thickening than the powder surface-treated by the organopolysiloxane or the alkylsilane individually.

Moreover, in the two stage surface treatment wherein the inorganic oxide powder is first treated with an alkylsilane and subsequently treated with silicone oil, the cooling process between each treatment is necessary, so that the process becomes complicated and the treatment time is prolonged. On the other hand, according to the one stage treatment using the above-mentioned mixed treatment liquid of this invention, the treatment process is simplified and the treatment effect is also high.

The treatment liquid according to the present invention comprises a mixed solution of 1-200 parts by weight of the organopolysiloxane of formula [1] and 1 part by weight of the silane compound. When the amount of the organopolysiloxane is less than the amount of the silane compound, a sufficient thickening effect is not obtained when blending the surface-modified inorganic oxide powder with the resin. On the other hand, when the amount of the organopolysiloxane is above the mixing ratio mentioned above, the variation with the passage of time of the viscosity becomes large at blending with the resin. If the amount of silane compound used is more than indicated by the above mixing ratio, the amount of the surface treatment agent remaining on the surface of the powder increases, so that % hexane extraction increases remarkably.

The surface modified inorganic oxide powder of the present invention is surface-treated by using the above-mentioned mixed liquid in the presence of an acid or a base. When the mixed liquid of the organopolysiloxane and the silane compound is basic, ammonia or an amine, such as diethylamine or triethylamine, etc., is used. Alternatively, if said solution is acidic, then an organic acid, such as acetic acid etc., or an inorganic acid, such as hydrochloric acid or nitric acid, etc., is used.

Regarding the amount of the acid or the base added to the mixed liquid of the organopolysiloxane and the silane compound, it is good that said amount can give the catalytic action. In general, 0.01 to 1 weight part of acid or base is suitable to 100 weight part of the mixed liquid of the organopolysiloxane and the silane compound. When the amount of addition is more than said range, the effect is saturated, so that it is not economical. On the other hand, when the amount of addition is less than said range, although the effect is obtained depending on the condition of the heat treatment or the kind of acid or base, the setup of the conditions is difficult.

In addition, when the above-mentioned acid or base is not used, the equivalent effect may be obtained by adjusting the reaction temperature and the reaction time. However, by adding the above-mentioned acid or base to the mixed liquid, the reaction can be promoted, so that the higher treatment effect can be obtained, and the reaction time can be reduced. Therefore, the surface modified powder can be made cheaply, wherein % hexane extraction is low and the variation with the passage of time of viscosity is very low. It is available that if necessary, a solvent is added to said surface treatment agent, i.e. the organo-poly-siloxane, the silane compound, and acid, or basic.

The process of the surface treatment can be done as follows, that is: an inorganic oxide powder is sprayed with or dipped into the surface treatment agent, comprising the mixed liquid of the above-mentioned organo-poly-siloxane and silane compound to which an acid or a base is added, and finally the treated powder is heated. Specifically, for example, an inorganic oxide powder is put into the container equipped with a stirring means, such as a Honshell mixer, and while stirring said powder under non-oxidizing atmosphere, an organo-poly-siloxane, an alkyl-silane and an acid or a base are added, or preferably the mixed surface treatment liquid comprising such compounds is sprayed on said inorganic oxide powder and the mixture is mixed uniformly.

Regarding the addition of the organo-poly-siloxane and the silane compound, 1 to 50 weight parts of the organo-poly-siloxane and 1 to 50 weight parts of the silane compound are suitable to 100 weight parts of the inorganic oxide powder, according to the specific surface area value of said inorganic oxide powder. When these surface treatment agents are less than 1 weight part, the obtained substance by the reaction cannot cover the whole surface of the inorganic oxide powder sufficiently, so that the treatment effect becomes insufficient. On the other hand, when these surface treatment agents are added more than 50 weight parts, the treatment effect is saturated, so that it is not economical.

After the above-mentioned surface treatment liquid is added to the inorganic oxide powder to be mixed uniformly, said mixed powder is heated for more than 10 minutes at the temperature range of 200°C to 400°C. When the heating temperature is less than 200°C, the reaction becomes insufficient, and the reaction product does not combine firmly with the surface of the inorganic oxide powder. Although it is preferable that the processing temperature is high so that the treating time is shortened, when the temperature is higher than 400°C, the thermal decomposition of the organo-poly-siloxane is started, so that it is not suitable. It is preferable that the heating atmosphere is non-oxidizing atmosphere, such as nitrogen gas.

### [V] % hexane extraction

The stability of the surface treatment can be evaluated quantitatively by the rate of extraction of normal-hexane. The % normal-hexane extraction is defined by the following formula [6], in which the extraction weight is the amount of the extracted treatment agent, and the weight of before extraction is the amount of the treatment agent adhering on the surface of the powder before extraction.$\text{% normal-hexane extraction [%] =} \text{(Extraction weight [g] /Weight of before extraction [g]) × 100}$

Specifically, for example, 15g of the sample is taken into a four-mouth flask of 2 L, and 500mL of normal-hexane is added to the flask. After replacing inside atmosphere of the reaction system to nitrogen, said normal-hexane is refluxed with stirring for 6 hours at 55°C and the extraction liquid is separated. For said extraction liquid, a solid-liquid separation is made by condensation, i.e. the solvent is removed. Then said % normal-hexane extraction is calculated by the ratio of the extracted amount of the treatment agent and the amount of the treatment agent adhering to the surface of the powder before extraction. Said amount of the treatment agent adhering to the surface of powder before extraction, is measured by the difference between the weight of powder before surface-treatment and after surface-treatment. It is preferable that the % extraction is less than 30%.

When the % extraction is high, the surface treatment agent has left from the inorganic oxide surface mostly, and the surface treatment agent is not be fixed sufficiently with chemically or physically on the surface of inorganic oxide powder. Therefore, when this inorganic oxide powder is kneaded into the resin etc., the stability with the passage of time becomes low.

### [VI] Resin compound

By the above-mentioned surface treatment, the excellent surface modified inorganic oxide powder is obtained, which is excellent in the stability with the passage of time and has higher thickening effect and higher thixotropy effect, when kneaded into the polar resin. Specifically, by adding the surface modified inorganic oxide fine powder of the present invention to the polar resin, the thickening or the thixotropy of this polar resin compound is improved remarkably. Especially, in the polar resin adhesives or the sealant, in which the main component is an urethane resin, an epoxy resin, an acrylic resin, an unsaturated polyester resin, a vinyl ester resin, or a silicone modified resin, the thickening effect and the thixotropy effect are remarkably improved. Moreover, regarding the amount of the addition of the surface modified inorganic oxide fine powder of the present invention to these resins, it is suitable that is less than 50% by weight.

### [EXAMPLS AND COMPARISON EXAMPLS]

Hereafter, the present invention is explained more concretely with the examples and the comparison examples. The range of the present invention is not limited by these examples. Moreover, the viscosity is measured in 2.5rpm by using E type viscometer made by Toki Sangyo Co.LTD, and the thixotropy value is measured at 20rpm.

### Example 1

100g of the silica powder (the brand name is Aerosil 200) having the specific surface area of 200m² / g by BET, which was made by a vapor phase method, was taken into the reaction container, and while stirring under nitrogen atmosphere, the mixed liquid comprising 20g of the silicone oil (the brand name is KF96-50cs, made by Shinetu Kagaku Kogyo Co. LTD), 4.5g of decyl-trimetoxi-silane, and 0.1g of dietylamin to 100g of the silica powder, was sprayed. After heating for 20 minutes at 350°C with stirring, said powder was cooled. to prepare the surface modified silica fine powder. In addition, 10g of this surface treated silica was dispersed in 300ml of hexane, and after refluxing for 2 hours with heating, said dispersed solution was separated from solid by using a filter. The % hexane extraction of the surface modified silica was 14%, which was calculated from the weight of the residue in said filtrated liquid obtained by the reduced pressure distillation. Moreover, 7.5g of this surface modified silica powder was mixed into 142.5g of the epoxy resin (Epicoat 828 made by Yuka-Shell Epoxy Co. LTD) to stir for 3 minutes at 3000rpm by the homo-mixer (made by Tokusyu Kika Kogyo Co. LTD), and this mixed substance was de-bubbled and after settled stationary for 2 hours at 22°C, the viscosity was measured, it was 175 Pa·s, and the thixotropy value was 2.7. Furthermore, after saving for 30 days in a container, where constant temperature at 40°C and constant humidity were kept, the viscosity of said substance was 172Pa·s, and the thixotropy value was 2.7.

### Example 2

The surface modified silica fine powder was prepared like Example 1 by using 100g of the silica powder having the specific surface area of 200 m² / g by BET, which was made by the vapor phase method (the brand name is Aerosil 200), and the mixed liquid comprising 20 g of the silicone oil (the brand name is KF96-50cs made by Shinetsu Kagaku Kogyou Co. LTD), 5.8g of decylmethyldimethoxy-silane, and 0.1g of diethylamine. And its % hexane extraction, the viscosity, and the thixotropy value were measured. The % hexane extraction was 11%, the viscosity was 166 Pa·s, and the thixotropy value was 2.6. Moreover, after saving for 30 days in the container, where constant temperature at 40°C and constant humidity were kept, the viscosity of said substance was 165Pa· s, and the thixotropy value was 2.6.

### Example 3

The surface modified silica fine powder was prepared like Example 1, by using 100g of the silica powder having the specific surface area of 130m² / g by BET, which was made by the vapor phase method (the brand name is Aerosil 130), and the mixed liquid comprising 20 g of the silicone oil (the brand name is KF96-50cs made by Shinetsu Kagaku Kogyo Co. LTD), 5.4g of hexadecyltrimethoxi-silane, and 0.1g of triethylamin, And its % hexane extraction, viscosity, and thixotropy value were measured. The % hexane extraction was 18%, the viscosity was 180 Pa·s, and the thixotropy value was 2.9. Moreover, after saving for 30 days in the container, where constant temperature at 40°C and constant humidity were kept, the viscosity of said substance was 175Pa·s, and the thixotropy value was 2.9.

### Example 4

The surface modified silica fine powder was prepared like Example 1, by using 100g of the silica powder having the specific surface area of 130m² / g by BET, which was made by the vapor phase method (the brand name is Aerosil 130),and the mixed liquid comprising 20 g of the silicone oil (the brand name KF96-50cs made by Shinestu Kagaku Kogyo Co. LTD), 0.5g of hexadecyltrimethoxi-silane, and 0.5g of diethylamin, And its % hexane extraction, viscosity, and thixotropy value were measured. The % hexane extraction was 10%, the viscosity was 185Pa·s, and the thixotropy value was 2.9. Moreover, after saving for 30 days in the container, where constant temperature at 40°C and constant humidity were kept, the viscosity of said substance was 182Pa·s, and the thixotropy value was 2.9.

### Example 5

The surface modified silica fine powder was prepared like Example 1, by using 100g of the silica powder having the specific surface area of 380m² / g by BET, which was made by the vapor phase method (the brand name is Aerosil 380), and the mixed liquid comprising 15g of the silicone oil (brand name is KF96-50cs made by Shinetsu Kagaku Kogyo Co. LTD), 15g of octadecyltrimethoxi-silane, and 1.0g of hydrochloric acid. And its % hexane extraction, viscosity, and thixo-tropy value were measured. The % hexane extraction was 16%, the viscosity was 170Pa·s, and the thixotropy value was 2.6. Moreover, after saving for 30 days in the container, where constant temperature at 40°C and constant humidity were kept, the viscosity of said substance was 170Pa·s, and the thixotropy value was 2.7.

### Example 6

The surface modified silica fine powder was prepared like Example 1, by using 100g of the silica powder having the specific surface area of 200m² / g by BET, which was made by the vapor phase method (the brand name is Aerosil 200), and the mixed liquid comprising 20g of the silicone oil (the brand name is KF96-50cs made by Shinetsu Kagaku Kogyo Co. LTD), 1.0g of octadecyltrimethoxy-silane, and 1.0g of acetic acid. And its % hexane extraction, viscosity, and thixotropy value were measured. The % hexane extraction was 15%, the viscosity was 188Pa·s, and the thixotropy value was 2.9. Moreover, after saving for 30 days in the container, where constant temperature at 40°C and constant humidity were kept, the viscosity of said substance was 188Pa·s, and the thixotropy value was 2.9.

### Comparison example 1

The surface modified silica fine powder was prepared like Example 1 excepting not to use diethylamin, by using 100g of the silica powder having the specific surface area of 200m² / g by BET, which was made by the vapor phase method (the brand name is Aerosil 200), and the mixed liquid comprising 20g comprising the silicone oil (the brand name is KF96-50cs, made by Shinetsu Kagaku Kogyo Co. LTD), and 4.5g of decylmethyldimethoxy-silane. And its % hexane extraction, viscosity, and thixotropy value were measured. The % hexane extraction was 32%, the viscosity was 118Pa·s, and the thixotropy value was 2.3. Moreover, after saving for 30 days in the container, where constant temperature at 40°C and constant humidity were kept, the viscosity of said surface modified silica powder was 137Pa·s, and the thixotropy value was 2.1.

### Comparison example 2

The surface modified silica fine powder was prepared like Example 1 excepting not to use the silicon oil and diethylamine, by using 100g of the silica powder having the specific surface area of 200m² / g by BET, which was made by the vapor phase method (the brand name is Aerosil 200), and the solution of 4.5g of decylmethyldimethoxy-silane. And its % hexane extraction, viscosity, and thixotropy value were measured. The % hexane extraction was 21%, the viscosity was 95Pa·s, and the thixotropy value was 1.1. Moreover, after saving for 30 days in the container, where temperature and humidity were kept constant at 40°C, the viscosity of said surface modified fine silica powder was 110Pa·s, and the thixotropy value was 1.1.

### Comparison example 3

The surface modified silica fine powder was prepared like Example 1 excepting not to use diethylamine, by using the 100g of the silica powder having the specific surface area of 380m² / g by BET, which was made by the vapor phase method (the brand name is Aerosil 380), and the mixed liquid comprising 20g of the silicone oil (the brand name is KF96-50cs, made by Shinetsu Kagaku Kogyo Co. LTD), and 4.5g of decy-ltrimethoxy-silane. And its % hexane extraction, tviscosity, and thixo-tropy property were measured. The % hexane extraction was 28%, the viscosity was 127Pa·s, and the thixotropy value was 2.4. Moreover, after saving for 30 days in the container, where constant temperatureat 40°C and constant humidity were kept, the viscosity of said surface modified silica fine powder was 110Pa·s, and the thixotropy value was 1.1.

### Comparaison example 4

The surface modified silica fine powder was prepared like Example 1 excepting not to use decyltrimethoxy-silane, by using 100g of the silica powder having the specific surface area of 200m² / g by BET, which was made by the vapor phase method (the brand name is Aerosil 200), and the mixed liquid comprising 20g of the silicone oil (the brand name KF96-50cs, made by Shinetsu Kagaku Kogyou Co. LTD), and 0.1g of diethylamin. And its % hexane extraction, viscosity, and thixo-tropy property were measured. The % hexane extraction was 16%, the viscosity was 146Pa·s, and the thixotropy value was 2.4. Moreover, after saving for 30 days in the container, where constant temperature at 40°C and constant humidity were kept, the viscosity of said surface modified fine silica powder was 170Pa·s, and the thixotropy value was 2.2.

### Comparison example 5

The surface modified silica fine powder was prepared like Example 1 excepting to use 100g of the silica powder having the specific surface area of 130m² / g by BET, which was made by the vapor phase method (the brand name is Aerosil 130), and the mixed liquid comprising 20g of decylmethoxy-silane, and 0.1g of triethylamin, And its % hexane extraction, the viscosity, and the thixotropy value were measured. The % hexane extraction was 42%, the viscosity was 92Pa·s, and the thixotropy value was 1.2. Moreover, after saving for 30 days in the container, where constant temperature and constant humidity were kept at 40°C, the viscosity of the substance was 105Pa·s, and the thixotropy value was 1.0.

The above-mentioned results were shown in Table 1 as contrasting. As clearly shown from these results, regarding each of the silica powder of present examples (A1 to A6), the % hexane extraction is as low as 14 to 18%, the viscosity is as high as 166 to188 Pa·s, the thixotropy value is high comparatively. Moreover, the viscosity and the thixotropy value after saving are hardly changed, and have high stability with the passage of time. On the other hand, regarding the comparison examples (B1 to B5), when the silica powder having the same specific surface area as the present examples was used, all of the viscosity are low, and the variation of the viscosity after saving is large. Moreover, the % hexane extraction is high excepting for a part. By the way, regarding the viscosity of the examples of the present invention (A1 to A6), the difference between the 30 days after and the initial time (variation with the passage of time), is less than 3. On the other hand, regarding the viscosity of the comparison examples, said difference is 14 - 24, and the variation with the passage of time is very large.

### [Availability on Industry]

The surface modified inorganic oxide powder of the present invention is excellent in the stability with the passage of time, and is able to show higher thickening effect and higher thixotropy effect, when kneaded into the polar resin. Especially, the remarkable improvement effoct of a thickening, and a thixotropy are obtained in the polar resin adhesives or the sealant, in which the main component is a urethane resin, an epoxy resin, an acrylic resin, an unsaturated polyester resin, a vinyl ester resin, or a silicone modified resin.

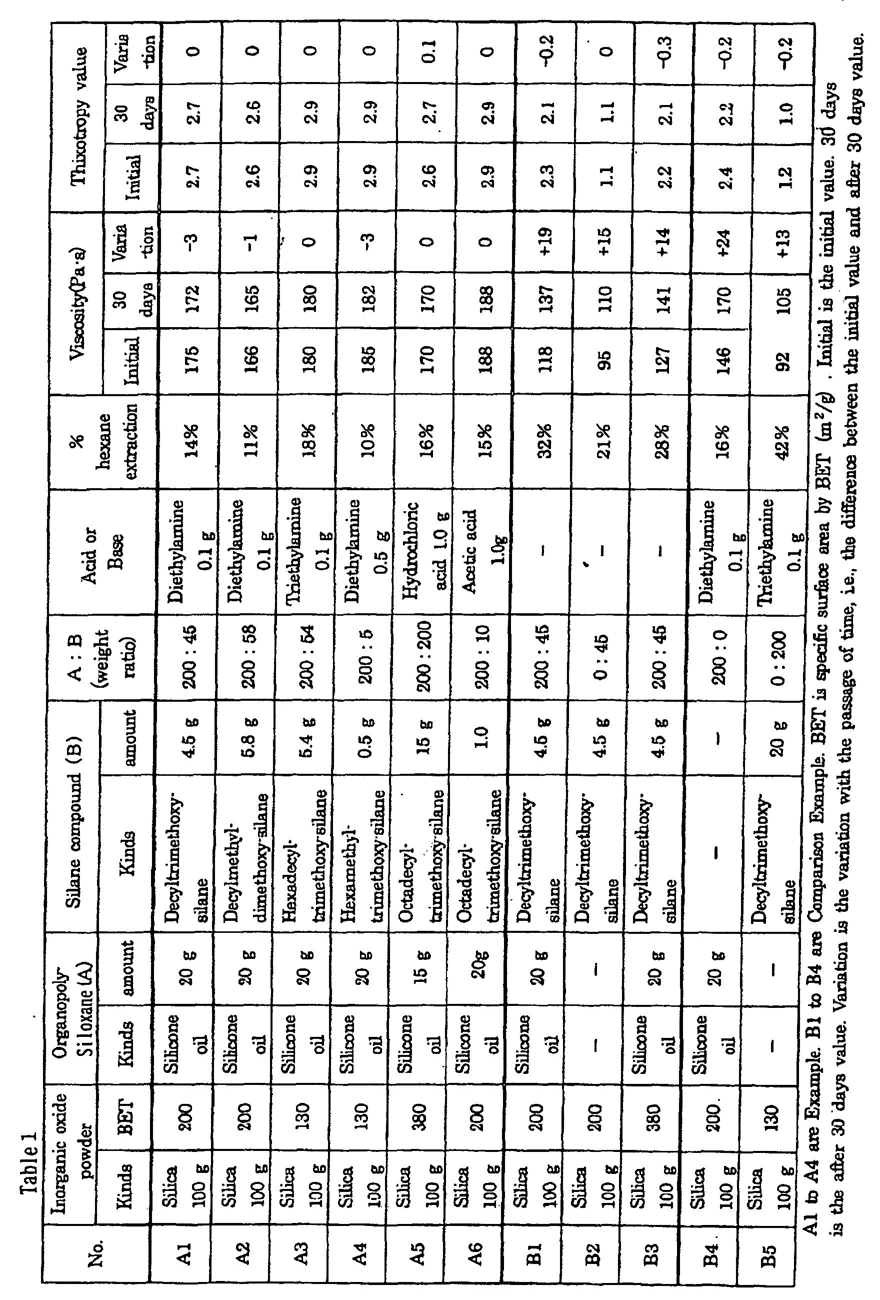

## Claims

1. A treatment liquid for surface modifying inorganic oxide powder which comprises a mixed solution of 1-200 parts by weight of an organopolysiloxane of formula [1] having a viscosity of 10 to 2000 cSt, at 25°C and 1 part by weight of a silane compound, and a substance which modifies the pH of the mixed solution selected from an inorganic acid, an organic acid, ammonia or an amine; 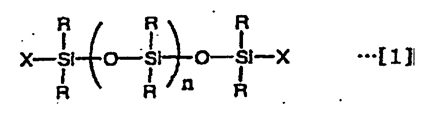 wherein R is independently hydrogen or an alkyl group optionally substituted by a vinyl group, a phenyl group, a polyether group, an epoxy group or an amino group; X is R, where R is as previously defined, or a hydrolysis group selected from a halogen atom, a hydroxyl group, or an alkoxy group, and n is an integer of 15 to 500.

2. A treatment liquid according to Claim 1, wherein the silane compound is an alkylsilane of general formula [2], [3] or [4], or any mixture of these:
R⁴SiX₃ [2]
R¹R²SiX₂ [3]
R¹R²R³SiX [4]
wherein R⁴, R¹, R² and R³ are independently alkyl groups and X is a halogen atom, a hydroxyl group or an alkoxy group.

3. A treatment liquid according to Claim 2, wherein at least one of R⁴, R¹, R² and R³ is an alkyl group including more than 6 carbon atoms.

4. A treatment liquid according to any preceding Claim, wherein the substance used to modify the pH of the liquid to render it basic is an amine of general formula [5]:
NR⁵R⁶R⁷ [5]
wherein R⁵, R⁶, and R⁷ are hydrogen, a methyl group or an ethyl group, optionally substituted by a functional group containing a vinyl group, a phenyl group, or an amino group.

5. A surface modified inorganic oxide powder having an extractability with normal hexane of less than 30% by wt., obtainable by:
(i) either spraying the treatment liquid as defined in any preceding Claim under a non-oxidizing atmosphere on an inorganic oxide powder or dipping an inorganic oxide powder in the treatment liquid as defined in any preceding Claim, and
(ii) heating the powder surface treated with the treatment liquid;
the extractability with normal hexane of the surface modified inorganic powder being the weight percentage of surface treating agent extracted by refluxing 15 g of the surface modified inorganic oxide powder and 500 ml of n-hexane in a 2 litre four-mouth flask under a nitrogen atmosphere for 6 hours at 55°C.

6. A surface modified inorganic oxide powder according to Claim 5, wherein said inorganic oxide powder is silica, titania or alumina having a specific surface area of 100 to 400m²/g when measured by the BET method.

7. A polar resin compound comprising less than 50% by weight of the surface modified inorganic oxide powder as defined in Claim 5 or Claim 6.

8. A polar resin compound according to Claim 7, comprising, as a main component, a urethane resin, an epoxy resin, an acrylic resin, an unsaturated polyester resin, a vinyl ester resin or a silicone modified resin.

9. The use of a polar resin compound as defined in Claim 7 or Claim 8 as an adhesive or a sealant.

10. A process for producing surface modified inorganic oxide powder comprising the steps of:
(i) either spraying the surface treatment liquid as defined in any of Claims 1-4 under a non-oxidising atmosphere on an inorganic powder or dipping the inorganic oxide powder in the said surface treatment liquid, and
(ii) heating the sprayed or dipped inorganic powder.

11. A process according to Claim 10, which comprises the steps of:
adding 0.01 to 1 weight part of an acid, an amine or ammonia to 100 parts by weight of the mixed solution, to prepare the surface treatment liquid,
spraying said surface treatment liquid on the inorganic oxide powder while stirring under a non-oxidizing atmosphere, and
heating said sprayed powder at 200°C - 400°C.

## Patentansprüche

1. Behandlungsflüssigkeit zur Oberflächenmodifizierung von anorganischem Oxidpulver, das eine gemischte Lösung von 1-200 Gew.-Teilen eines Organopolysiloxans der Formel (1) mit einer Viskosität von 10-2.000 cSt bei 25°C und 1 Gew.-Teil einer Silanverbindung und einer Substanz, die den pH-Wert der gemischten Lösung modifiziert, ausgewählt aus einer anorganischen Säure, einer organischen Säure, Ammoniak oder einem Amin, umfasst: 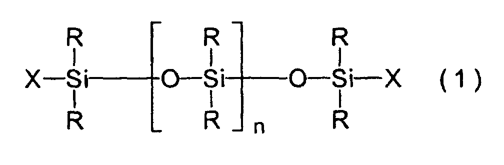 worin R unabhängig voneinander Wasserstoff oder eine Alkylgruppe, die gegebenenfalls mit einer Vinylgruppe, einer Phenylgruppe, einer Polyethergruppe, einer Epoxygruppe oder einer Aminogruppe substituiert ist, darstellt; X ist R, wobei R wie zuvor definiert ist, oder eine Hydrolysegruppe, die ausgewählt ist aus einem Halogenatom, einer Hydroxylgruppe oder einer Alkoxygruppe, und n ist eine ganze Zahl von 15-500.

2. Behandlungsflüssigkeit gemäss Anspruch 1, worin die Silanverbindung ein Alkylsilan der allgemeinen Formel (2), (3) oder (4) oder eine beliebige Mischung daraus ist:
R⁴SiX₃ (2)
R¹R²SiX₂ (3)
R¹R²R³SiX (4)
worin R⁴, R¹, R² und R³ unabhängig voneinander Alkylgruppen sind, und X ist ein Halogenatom, eine Hydroxylgruppe oder eine Alkoxygruppe.

3. Behandlungsflüssigkeit gemäss Anspruch 2, worin mindestens eines von R⁴, R¹, R² und R³ eine Alkylgruppe ist, die mehr als 6 Kohlenstoffatome einschliesst.

4. Behandlungsflüssigkeit gemäss mindestens einem der vorhergehenden Ansprüche, worin die Substanz, die zur Modifizierung des pH-Werts der Flüssigkeit in einer solchen Weise verwendet wird, dass sie basisch wird, ein Amin der allgemeinen Formel (5) ist:
NR⁵R⁶R⁷ (5)
worin R⁵, R⁶ und R⁷ Wasserstoff, eine Methylgruppe oder eine Ethylgruppe darstellen, gegebenenfalls substituiert durch eine funktionelle Gruppe, die eine Vinylgruppe, eine Phenylgruppe oder eine Aminogruppe enthält.

5. Oberflächenmodifiziertes anorganisches Oxidpulver mit einer Extrahierbarkeit mit n-Hexan von weniger als 30 Gew.%, das erhältlich ist durch:
(i) entweder Aufsprühen der Behandlungsflüssigkeit, wie in mindestens einem der vorhergehenden Ansprüche definiert, in einer nichtoxidierenden Atmosphäre auf ein anorganisches Oxidpulver oder Eintauchen eines anorganischen Oxidpulvers in die Behandlungsflüssigkeit, wie in mindestens einem der vorhergehenden Ansprüche definiert, und
(ii) Erwärmen der mit der Behandlungsflüssigkeit behandelten Pulveroberfläche;
die Extrahierbarkeit mit n-Hexan des oberflächenmodifizierten anorganischen Pulvers ist der Gewichtsprozentsatz des Oberflächenbehandlungsmittels, das durch Erwärmen von 15 g des oberflächenmodifizierten anorganischen Oxidpulvers und 500 ml n-Hexan in einem 2 ℓ-Vierhalskolben unter einer Stickstoffatmosphäre bei 55°C unter Rückfluss für 6 Stunden extrahiert wird.

6. Oberflächenmodifiziertes anorganisches Oxidpulver gemäss Anspruch 5, worin das anorganische Oxidpulver Silica, Titania oder Alumina mit einer spezifischen Oberfläche von 100-400 m²/g ist, gemessen nach dem BET-Verfahren.

7. Polare Harzverbindung, die weniger als 50 Gew.% des oberflächenmodifizierten anorganischen Oxidpulvers gemäss Anspruch 5 oder 6 umfasst.

8. Polare Harzverbindung gemäss Anspruch 7, die als Hauptkomponente ein Urethanharz, ein Epoxyharz, ein Acrylharz, ein ungesättigtes Polyesterharz, ein Vinylesterharz oder ein siliconmodifiziertes Harz umfasst.

9. Verwendung einer polaren Harzverbindung gemäss Anspruch 7 oder 8 als Klebstoff oder Dichtmittel.

10. Verfahren zur Herstellung eines oberflächenmodifizierten anorganischen Oxidpulvers, das folgende Schritte umfasst:
(i) entweder Aufsprühen der Oberflächenbehandlungsflüssigkeit gemäss mindestens einem der Ansprüche 1 bis 4 in einer nichtoxidierenden Atmosphäre auf ein anorganisches Pulver oder Eintauchen des anorganischen Oxidpulvers in diese Oberflächenbehandlungsflüssigkeit, und
(ii) Erwärmen des besprühten oder eingetauchten anorganischen Pulvers.

11. Verfahren gemäss Anspruch 10, das folgende Schritte umfasst:
Zugabe von 0,01-1 Gew.-Teilen einer Säure, eines Amins oder Ammoniaks zu 100 Gew.-Teilen der gemischten Lösung, wodurch die Oberflächenbehandlungsflüssigkeit hergestellt wird,
Aufsprühen der Oberflächenbehandlungsflüssigkeit auf das anorganische Oxidpulver unter Rühren in einer nichtoxidierenden Atmosphäre und
Erwärmen des besprühten Pulvers auf 200-400°C.

## Revendications

1. Liquide de traitement pour la modification de la surface d'une poudre d'oxyde inorganique qui comprend une solution mélangée de 1 à 200 parties en poids d'un organopolysiloxane répondant à la formule [1] présentant une viscosité de 10 à 2000 cSt à 25° C et 1 partie en poids d'un composé silane, et une substance qui modifie le pH de la solution mélangée choisie parmi un acide inorganique, un acide organique, l'ammoniac ou une amine ; 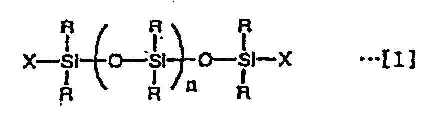 dans laquelle R représente indépendamment un hydrogène ou un groupe alkyle substitué facultativement par un groupe vinyle, un groupe phényle, un groupe polyéther, un groupe époxy ou un groupe amino ; X est R, où R est tel que défini précédemment, ou un groupe d'hydrolyse choisi parmi un atome d'halogène, un groupe hydroxyle ou un groupe alcoxy ; et n représente un nombre entier de 15 à 500.

2. Liquide de traitement selon la revendication 1, dans lequel le composé silane est un alkylsilane répondant à la formule générale [2] , [3] ou [4], ou tout mélange quelconque de ceux-ci :
R⁴SiX₃ [2]
R¹R²SiX₂ [3]
R¹R²R³SiX [4]
dans laquelle R⁴, R¹, R² et R³ représentent indépendamment des groupes alkyle et X représente un atome d'halogène, un groupe hydroxyle ou un groupe alcoxy.

3. Liquide de traitement selon la revendication 2, dans lequel au moins un des R⁴, R¹, R² et R³ représente un groupe alkyle incluant plus de 6 atomes de carbone.

4. Liquide de traitement selon l'une quelconque des revendications précédentes, dans lequel la substance utilisée pour modifier le pH du liquide pour le rendre basique est une amine répondant à la formule générale [5] ;
NR⁵R⁶R⁷ [5]
dans laquelle R⁵, R⁶ et R⁷ représentent un hydrogène, un groupe méthyle ou un groupe éthyle, facultativement substitués par un groupe fonctionnel contenant un groupe vinyle, un groupe phényle ou un groupe amino.

5. Poudre d'oxyde inorganique à surface modifiée ayant une aptitude à l'extraction avec de l'hexane normal de moins de 30 % en poids, pouvant être obtenue par :
(i) soit pulvériser le liquide de traitement tel que défini dans l'une quelconque des revendications précédentes sous une atmosphère non oxydante sur une poudre d'oxyde inorganique, soit immerger une poudre d'oxyde inorganique dans le liquide de traitement tel que défini dans l'une quelconque des revendications précédentes, et
(ii) chauffer la surface de la poudre traitée avec le liquide de traitement ;
l'aptitude à l'extraction avec l'hexane normal de la poudre inorganique à surface modifiée étant le pourcentage en poids de l'agent de traitement de surface extrait par reflux de 15 g de la poudre d'oxyde inorganique à surface modifiée et de 500 ml de n-hexane dans un flacon à quatre cols de 2 litres sous une atmosphère d'azote pendant 6 heures à 55°C.

6. Poudre d'oxyde inorganique à surface modifiée selon la revendication 5, dans laquelle ladite poudre d'oxyde inorganique est constituée de silice, d'oxyde de titane ou d'alumine présentant une aire surfacique spécifique de 100 à 400 m²/g lorsque mesurée par la méthode BET.

7. Composé de résine polaire comprenant moins de 50 % en poids de la poudre d'oxyde inorganique à surface modifiée telle que définie dans la revendication 5 ou 6.

8. Composé de résine polaire selon la revendication 7, comprenant, comme composant principal, une résine uréthane, une résine époxy, une résine acrylique, une résine polyester non saturée, une résine d'ester vinylique ou une résine modifiée par silicone.

9. Utilisation d'un composé de résine polaire selon la revendication 7 ou 8, comme adhésif ou agent d'étanchéité.

10. Procédé pour produire de la poudre d'oxyde inorganiqué. à surface modifiée comprenant les étapes consistant à :
(i) soit pulvériser le liquide de traitement de surface tel que défini dans l'une quelconque des revendications 1 à 4 sous une atmosphère non oxydante sur une poudre inorganique, soit immerger la poudre d'oxyde inorganique dans ledit liquide de traitement de surface, et
(ii) chauffer la poudre inorganique pulvérisée ou immergée.

11. Procédé selon la revendication 10, qui comprend les étapes consistant à :
ajouter de 0,01 à 1 partie en poids d'un acide, d'une amine ou d'ammoniac à 100 parties en poids de la solution mélangée en vue de préparer le liquide de traitement de surface,
pulvériser ledit liquide de traitement de surface sur la poudre d'oxyde inorganique tout en agitant sous une atmosphère non oxydante, et
chauffer ladite poudre pulvérisée à une température de 200°C à 400°C.
